# EUROPEAN PATENT SPECIFICATION

(11) **EP 2 195 136 B1**
(45) Date of publication and mention of the grant of the patent: **28.11.2012**
(21) Application number: 08801033.5
(22) Date of filing: 20.08.2008
(51) Int. Cl.: B23Q 5/10, H02K 26/00

(54) **DRIVING MECHANISM CONFIGURATION OF WORKING MACHINE, ESPECIALLY FOR MACHINE-TOOL DRIVE**
ANTRIEBSMECHANISMUSKONFIGURATION FÜR ARBEITSMASCHINE, INSBESONDERE FÜR WERKZEUGMASCHINENANTRIEB
CONFIGURATION DE MÉCANISME D'ENTRAÎNEMENT DE MACHINE DE TRAVAIL, PARTICULIÈREMENT POUR UN ENTRAÎNEMENT DE MACHINE-OUTIL

(30) Priority: 22.08.2007 CZ 20070572
(43) Date of publication of application: 16.06.2010
(73) Proprietor: PELUG - TECH s.r.o., 682 01 Vyskov (CZ)
(72) Inventor: LUSKA, Petr, 682 01 Vyskov (CZ)
(74) Representative: Kendereski, Dusan
(86) International application number: PCT/CZ2008/000098
(87) International publication number: WO 2009/024104

(56) References cited:
- EP-A- 1 543 916
- DE-C1- 10 204 965
- US-A- 5 239 892
- US-A1- 2004 231 473

## Description

### Field of the Invention

The invention concerns the arrangement of a revolving table of big machine-tools, in particular boring mills created by a torque motor and a mounting system.

### State of the Art

Till now, the drive for working machines, especially machine-tools, e.g. for boring mills, machining centers, revolving tables or great positioning mills was solved with the aid of classical electro motors fitted with a gearbox. The electromotor is of usual construction. Its main parts are a stable stator and a revolving rotor that are mutually separated by an air space. By the aid of wiring systems placed in both parts, the supplied electrical energy is changed, by means of electro-magnetic field in the air space, at mechanical one, which is given over by the motor, at the rotor shaft, to the driven device. For this purpose, it is usually constructed an electromotor with a long rotor of a smaller diameter. The force of the electromotor, and by this the load, is created so that the force vector is a little one, but it is acting In a greater length (the length of the motor) so, that the small vectors are added together. The connection of the electromotor with the gearbox has a task to convert the high engine speed and the low torque to low engine speed and high torque, which are necessary for driving those machine-tools. Such a constructional disposition is bringing many disadvantages, among others also a necessity to use great and complicated gearboxes. Using of gearboxes of complicated constructions takes many problems with, such as a play between gearings, which causes noise and inexactness. The great complicity of the device is not negligible, too, as it is causing high production expenses. A possibility of exact positioning or that of positioning by interpolating two or more axes seems very problematic one. The above mentioned disadvantages are replaced by the torque motor. These motors are permanent-field excited alternating synchronic motors, which are characterized by great moment at low speed. Such parameters make possible to construct drivers without gearboxes. The shaft of the motor is positioned in radial bearings and the motors are provided by position sensor and water cooling. Their advantage is not only a small built-up area, which is achieved by omitting the gearbox, but also practically no plays, higher total efficiency, high dynamics, no maintenance of gearbox and also lower noise in comparison with a driving provided by the gearbox. Till now, the torque motors have gained ground at machines for plastics processing, at textile, packaging and paper processing machines.

In DE 102 04 965 C1 an assembly machine comprises a machine frame, a plurality of work stations arranged on a circular carrier plate secured on the surface of the machine frame, and a rotary dish that is rotationally driven in cycles and arranged concentrically with the carrier plate. The rotary dish protrudes along the circumference of the carrier plate and forms a ring-shaped support surface for work pieces that surround the carrier plate. The machine frame is a cast machine component that comprises a table-like substructure and a console on the top side with a ring-shaped mounting surface for receiving a drive for the rotary dish. The rotary dish drive is a direct drive that comprises a ring-shaped stator with electrical windings that is secured on the mounting surface, and a rotor fitted with permanent magnets. The rotor forms a carrier for and is detachably connected with the rotary dish.

### Summary of the Invention

The purpose of the invention is to create such arrangement of a revolving table of big machine-tools, in particular boring mills, that will make possible a precise starting-up and stopping of the machine-tool table with great mass.

This task fulfills and the above-mentioned disadvantages replaces arrangement of a revolving table of a big machine-tools, in particular boring mills, the subject matter of which consists in the fact, that the integral part of its stable part is a stator of the torque motor, and the integral part of its revolving part is a rotor of the torque motor, where the both the rotor and the stator of the torque motor are aligned axially to each other and to the machine central axe and are fixed to the mounting system, the ratio of the stator diameter to the stator height of the torque motor being greater than 2. The motor torque is greater than 10.000 Nm and the motor has a greater number of poles, usually greater than 100.

The revolving table, when used for great machine-tools, e.g. boring mills, has its stable part formed by machine support, in which the stator of the torque motor is fixed, fitted by at least one winding, while the revolving part is created by machine working plate, whose part forms the rotor of the torque machine fitted by at least one permanent magnet, both the rotor and the stator of the torque motor being aligned axially to each other and to the machine central axe, too, and for the axial alignment of the working plate and of the rotor of the torque motor toward the machine central axe, these parts are fixed in the mounting system, which is created by a pin fixed in the machine support, on which a radial bearing is mounted, on which the working plate is set up, while for the revolving mounting of the working plate, between the machine support and the working plate, at their proximal end, there is mounted the radial bearing and taken out the lubricant system conduit, and at the distant end of the working plate there is a hydrostatic mounting connected to the hydrostatic system.

To simplify the mounting system construction used at the machine-tools, above all at boring mills, it is advantageous, when between the machine support and the working plate, at their proximal end, there is mounted a radial bearing and taken out the lubricant system conduit, and at the distant end there is mounted the axial bearing connected to the lubricant system conduit.

The drive for machine is modified by construction for using as a generator for electric energy production. A generator, whose basic construction part is the torque motor, has its stable part made by a frame of the electric machine, in which there is mounted the stator of the torque motor fitted by at least one winding, while the revolving part is created by the flange of the electric machine, to which there is mounted the driving shaft and the rotor of the torque motor fitted by at least one rotor excitation coil, both the rotor and the stator of the torque motor being axially aligned towards the central axe, and to secure the revolving movement, both the stable and the revolving part are fixed to the mounting system consisting of an external ring and an internal ring of the annular bearing.

The drive for machines modified by construction for using at radars has in its stable part, formed by the radar basis, mounted the stator of the torque motor equipped by at least one winding and in its revolving part, formed by the radar revolving part, fixed the rotor of the torque motor equipped by at least one permanent magnet, both the rotor and stator of the torque motor being axially aligned towards the radar central axe, and to secure the rotating movement, both the stable and the revolving part are fixed to the mounting system consisting of the external ring and the internal ring of the annular bearing.

The main advantage of the new arrangement of a revolving table of a big machine-tools, in particular boring mills, is the fact that there are any gears missing and its construction is very simple one. The drive is formed only by two parts, which are the machine support and the working plate. It is necessary to make a sufficiently efficient torque motor for this construction (with high torque), which will form a part of the machine driving. The torque motor has to have a sufficient force, to be able to move or position the machined parts with a mass of the order of metric tons and more. From this reason, it is necessary to use a motor with nominal torque of c. 10.000 Nm and more. It seems that the torque motor is with the greatest advantage for that reason, while being characterized by great diameter and small length. As a consequence is, that the force vector is great (i.e. it disposes by great torque, but it takes effect at smaller length). If comparing the motor diameter and its height (i.e. the height of stator plate bunch and the rotor height), and we impose the index D for the motor diameter and the index h for the height of stator plate bunch, than the rate D : h is higher then one for the torque motors. For classical motors in the cage execution, the rate D : *h* is smaller than one. The torque motors that can be used for working machines, have the rate D : H higher than 2. For such a rate, the torque motor used in working machines has to have the following parameters. Its torque is greater than 10.000 Nm and the maximal engine speed is n = 300 rpm.

The torque motor is formed by two concentric parts with higher diameter and smaller height, which is why it is not much appropriate to be mounted in a cage. But thanks its form, it is ideal for direct mounting, e.g. to a machine-tool or to the driving of a crane pivot and other similar industrial devices having a central swivel plate, and this by such a way that it should make its integral part. This motor is also ideal to deduce great torques, a classical motor being no match for, because for such a torque (force) it would be too great or it would require a gear-box. The torque motor forms two centralized rings, which are the stator with a winding and the rotor equipped by permanent magnets. These rings are than forming an integrated part of the machine-tool.

### Brief Description of the Figures on Drawings

An example of the invention execution is demonstrated at the drawings, where at the fig. 1 is a schematic view at the basic constructional disposition of the working machine driving, fig. 2 illustrates the driving construction parts for machine-tools - boring mill in a longitudinal section, fig. 2a represents the driving construction parts for machine-tools with a simplified mounting system, fig. 2b represents a detailed view at the hydrostatic system, fig. 3 represents a view at the machine in the execution as a torque generator, and fig. 4 represents a view at the driving of great radars rotating equipments.

### Description of the Exemplary Embodiment

The working machine principle, especially for machine-tools in the meaning of this invention, will be further cleared up but not limited in following examples.

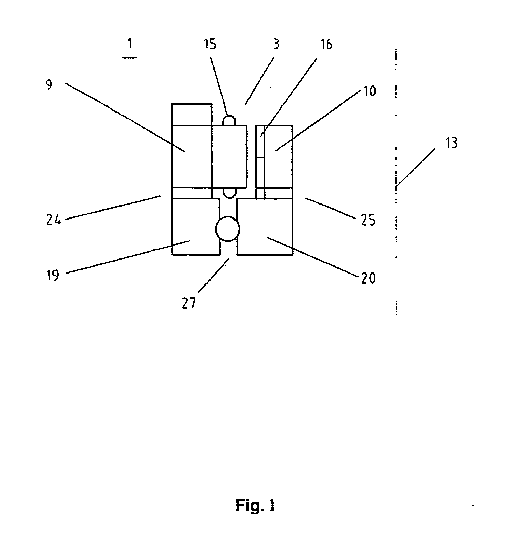

The basic arrangement of the working machine drive **1** according this invention is demonstrated at the fig. 1. The parts of drive **1** in this execution are ordered symmetrically around the machine axe **13**. Individual parts of the machine drive **1** are formed by the torque motor **3**, which is its integral part, and the mounting system **27**. It is dealing about the liquid cooled more-poles permanently excited alternate synchronic motor. This one is formed by the stator **9** of the torque motor **3**, which is an integral part of the stable part **24** of the drive **1**, and by the rotor **10** of the torque motor **3**, which is an integral part of the revolving part **25**, both the rotor **10** and the stator **9** of the torque motor 3 being axially aligned one to other, as also to the axe **13** of the machine. At the mounting system **27**, which could be e.g. an annular bearing formed by an external ring **19** and an internal ring **20**, there is mounted the stable and also the revolving part, **24** and **25**, of the machine drive 1. Here at, the stable part **24** is fixed to the external ring **19** of the annual bearing, while the revolving part **25** of the driving **1** is fixed at the internal ring **20** of the annual bearing.

The function of the drive **1** for machines is the following. By connecting the electric supplies **17** (not shown at the fig. 1) to the voltage, the excitation current is starting to flow in the winding **15** of the stator **9** bobbins in such a way that it creates the revolving magnetic field. This field brings in the movement the rotor **10** excited by the permanent magnets **16**, by which contemporaneously also the revolving part **25** fixed in the mounting system **27** is brought to the movement.

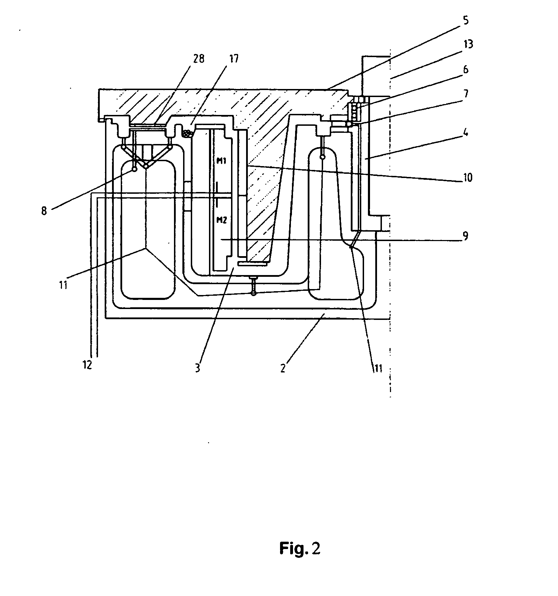

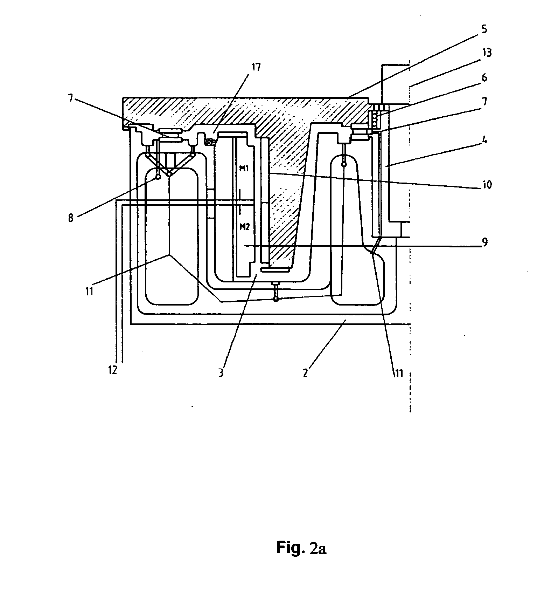

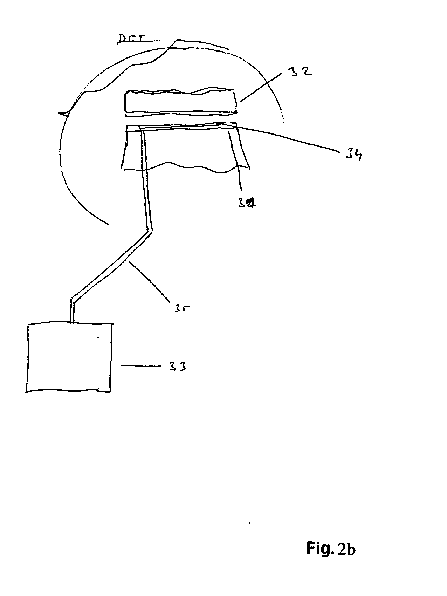

The drive **1** designed for a big machine-tool, where it is necessary to drive revolving tables or other positioning equipment is shown at fig. 2. For example, the drive **1** for a boring mill includes the torque motor **3**, the mounting system **27**, the revolving part **25** of the machine drive **1** formed by the working plate **5** of the machine-tool, and the stable part **24** of the machine drive **1** formed by the machine support **2**. The torque motor 3, which is an integral part of the machine-tool, is formed by two concentric rings, one of them being the stator **9** fitted by the winding **15** and mounted in the machine support **2**, which is - in this case - the machine supporting frame, and the other being the rotor **10** with permanent magnets **16**, which is fixed to the revolving working plate **5**. Hear at, the stator **9** is mounted externally to the rotor **10** and both these parts are axially aligned one to other, as also to the central pin **4**, which is fixed in the machine support **2**, and for the coaxial alignment of the working plate **2** and of the rotor **10** of the torque motor **3** towards the machine central axe **13** are these parts fixed in the mounting system **27**, which - in this case - is formed by a pin **4**, at which it is mounted the radial bearing **6,** at which it is mounted the working plate **5**, while for the revolving mounting of the working plate **5**, between the machine support **2** and the working plate **5**, at their proximal end, there is mounted the radial bearing 6 and brought out the lubrication system conduit **11** and at the distant end, there is mounted the hydrostatic system **28**. As seen from the fig. 2b, the hydrostatic system **28** is formed by the top face **32** and the bottom face **31**, which is equipped by pockets **34** for keeping the hydraulic oil. To these pockets **34** there is connected the hydrostatic conduit **8** of the hydraulic oil, by which the latter is brought from hydraulic aggregate **33** to hydrostatic system **28**.

The drive for machine-tool - boring mill is the following. The torque motor **3** is working in this case identically as described here-above. The revolving part **25** formed by the working plate **5** serves for fixing of machined components. The stable part **24** is formed by the machine support **2** of the machine-tool, which is the supporting frame. There is the stator **9** with the winding **15** mounted on the frame. The revolving magnetic field generated by the exciting current actuates the rotor **10** fixed at the revolving part **25**. The revolving part **25** mounted at the radial bearing **6** rotates round the pin **4**, on which the bearing is fixed. Its horizontal position by the rotation is secured by the axial bearing **7** at one end, and at the other end it is secured by the hydrostatic system **28**. This system of working plate mounting is formed by two mating faces, the lower face **31** having cavities (pockets) in itself, which are connected to the pressure system, from which the oil is forced under pressure to these pockets. The other, superior face **32** is a flat one. It is ground and hard, because of sinking of frictional forces and of the lifetime. That superior face **32** is enclosing the oil in the pockets, and the oil is, under pressure, upholding the working plate **5** at the oil film. The oil pressure is generated by the hydraulic aggregate **33** (not shown at the picture) and the oil is brought to the pockets **34** through the pipes **35**.

Further variant mounting of the working plate **5** is shown at the fig. 2a. From this figure it is visible, that for the revolving mounting of the working plate **5**, between the machine support **2** and the working plate **5**, at their proximal end, there is mounted the radial bearing **6** and brought out the lubrication system conduit **11** and at the distant end there is mounted the axial bearing **7** connected to the conduit **11** of the lubrication system.

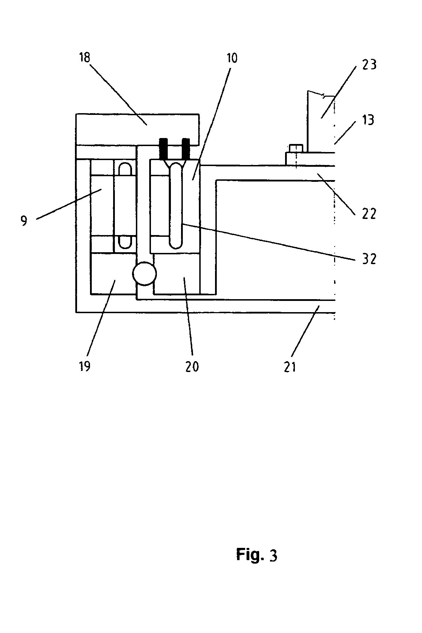

Further variant of the drive **1** execution is its constructional modification suitable for using as a torque generator. The machine driving **1** of this construction is shown at the fig. 3. The drive **1** for machines has its stable part **24** formed by the frame **21** of the electric machine, in which there is mounted the stator **9** of the torque motor **3** equipped by at least one winding **15**, while the revolving part **25** is formed by the flange **22** of the electric machine, to which it is mounted the driveshaft **23** and the rotor **10** of the torque motor **3** equipped by at least one exciting winding **18** of the rotor **10**, both the rotor **10** and the stator **9** of the torque motor **3** being aligned axially against the central axe **13**, and to assure the rotating movement, the stable and the revolving part, **24** and **25**, are fixed to the mounting system **27**, which is formed by external ring **19** and internal ring **20** of the annular bearing.

The drive for a generator is the following. The torque motor **3** is working in this case identically as described here-above. The revolving part **25** formed by the flange **22** serves for the mounting of the shaft **23**. The stable part **24** is formed by the frame **21** of the electric machine, on which the stator **9** with the winding **15** is mounted. The revolving magnetic field formed by the exciting current takes in movement the rotor **10** mounted at the revolving part **25**. Both, the revolving part **25** and the stable part are mounted at the mounting system **27**. In this case it concerns the annular bearing formed by external ring **19** and internal ring **20**. The stable part 24 is mounted to the external ring **19** of the annular bearing and assures a firm connection between the stator **9** and the frame **21** of the electric machine, while the revolving part **25** of the machine drive **1** is mounted at the internal ring **20** of the annular bearing and assures the rotating movement of the revolving part **25**, and further also the rotor **10** and stator **9** axial alignment against the axe **13** of the torque generator.

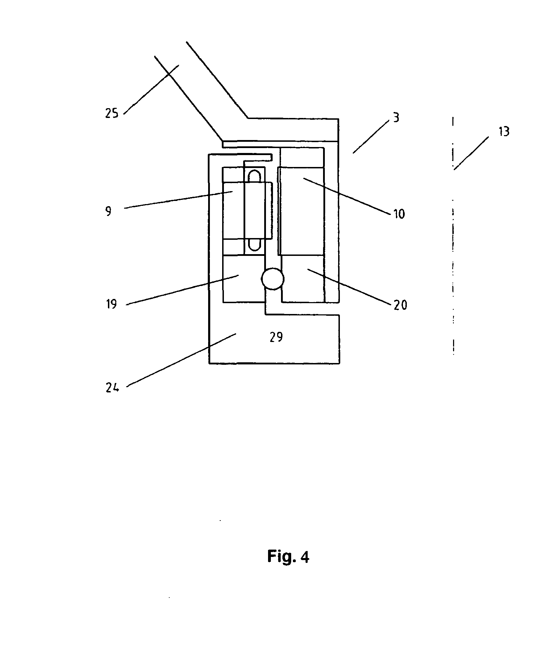

Further variant of the drive **1** usage according the invention is its using for revolving equipment of great radars, where such an execution is necessary that the central part would have a free straightway for other parts of the equipment This is possible due to the great diameter of the torque motor **3** and especially to its characteristic construction in the form of two concentric rings, which are forming the basic assembly of the torque motor 3. The motor driving **1** in execution for revolving equipments of great radars is represented at the fig. 4. The drive **1** has in its stable part **24** mounted the stator **9** of the torque motor **3** equipped by at least one winding **15** and in its revolving part **25** mounted the rotor **10** of the torque motor **3** equipped by at least one permanent magnet **16**, both the rotor **10** and the stator **9** of the torque motor **3** being axially aligned towards the central axe 13 of the radar. To assure the rotating movement, both the stable part **24** and the revolving part **25** are fixed to the mounting system **27** consisting of the external ring **19** and the internal ring **20** of the annual bearing.

The drive function for radar is the following. The torque motor **3** is working in this case identically as described here-above. The revolving part **25** formed by an arm serves for mounting of the radar rotating parts **30**. The stable part **24** is formed by the radar basis **29** and is designed for mounting of the stator **9** with the winding **15**. The revolving magnetic field created by the exciting current actuates the rotor **10** mounted at the revolving part **25**. Both the revolving part **25** and the stable part **24** are arranged at the mounting system **27**. In this case it concerns the annular bearing formed by the external ring **19** and the internal ring **20**. The stable part 24 is mounted to the external ring **19** of the annular bearing and assures a firm connection between the stator **9** and the support **29** of the radar, while the revolving part **25** of the machine drive **1** is mounted at the internal ring **20** of the annular bearing and assures the rotating movement of the revolving part **25**, and further also the axial alignment of the rotor **10** and stator **9** towards the radar axe **13**.

### Industrial Applicability

Arrangement of a revolving table of big machine-tools is suitable to generate a great force, where it is not a necessity of high speed. The ideal applications, as e.g. by the boring mill, revolving mill, pivot of a great crane, radio locator, wind power station, water power station, come out from these requirements, this driving is possible to use for function of generator, where it forms directly a part of the revolving machinery (turbines, propellers), and no gearings are needed.

## Claims

1. Arrangement of a revolving table of big machine-tools, in particular boring mills, formed by a torque motor (**3**) and by a mounting system (**27**), on which both a revolving part (**25**) and a stable part (**24**) are arranged, where the stator (**9**) of the torque motor (**3**), fitted by at least one winding, is an integral part of the stable part (**24**) of the machine formed by machine support (**2**) and the rotor (**10**) of the torque motor, fitted by at least one permanent magnet, is an integral part of the revolving part (**25**) of the machine formed by a machine working plate, where both the rotor (**10**) and the stator (**9**) of the torque motor (**3**) are axially aligned to each other and to the machine axis (**13**) and are fixed to the mounting system (**27**), that forms a pin (**4**) fixed in the machine support (**2**), at which a radial bearing (**6**) is mounted, at which the working plate (**5**) is settled, while for the revolving mounting of the working plate (**5**), between the machine support (**2**) and the working plate (**5**), at their proximal end, there is mounted the radial bearing (**6**) and brought out the lubrication system conduit (**11**), while the ratio of the diameter (**D**) of the rotor (**10**) to the height (**h**) of the stator (**9**) of the torque motor (**3**) being greater than 2, **characterized by the fact** that the motor torque is greater than 10.000 Nm and the motor has a number of poles greater than 100 and at the distant end there is mounted an axial bearing (**7**) connected to the lubrication system conduit (**11**) or an hydrostatic system (**28**) for securing the horizontal position of the revolving part (**25**).

2. Arrangement of a revolving table of big machine-tools, in particular boring mills, according to the claim 1, **characterized by** the fact that the hydrostatic system (**28**) is formed by a top face (**32**) and a bottom face (**31**), which is equipped by pockets (**34**) for keeping the hydraulic oil, while to these pockets (**34**) there is connected the hydrostatic conduit (**8**) of the hydraulic oil, by which the latter is brought from hydraulic aggregate (**33**) to hydrostatic system (**28**).

## Patentansprüche

1. Der Aufbau des Drehtisches einer großen Bearbeitungsmaschine, hauptsächlich einer Karussell-Drehbank, die aus einem Momentmotor (**3**) und einem Lagersystem (**27**) besteht, auf dem ein drehbarer Teil (**25**) und ein fester Teil (**24**) angeordnet sind, wo den integralen Bestandteil des festen Teils (**24**) der Maschine, der aus einem Maschinengestell (**2**) besteht, der Ständer (**9**) des Momentmotors (**3**) darstellt, der mit mindestens einer Windung ausgestattet ist, und wo den integralen Bestandteil des drehbaren Teils (**25**) der Maschine, der aus einer Arbeitsplatte (**5**) der Maschine besteht, der Rotor (**10**) des Momentmotors darstellt, der mit mindestens einem Dauermagnet (**16**) ausgestattet ist, wo der Rotor (**10**) sowie der Ständer (**9**) des Momentmotors (**3**) einander gegenüber und gegenüber der Achse (**13**) der Maschine koaxial angeordnet sind, und an dem Lagersystem (**27**) fest angeschlossen sind, das aus einem Bolzen (**4**) besteht, der in dem Maschinengestell (**2**) befestigt ist, auf dem ein Querlage (**6**) angeordnet ist, auf dem die Arbeitsplatte (**5**) gelegt ist, dagegen für die drehbare Lagerung der Arbeitsplatte (**5**) zwischen dem Maschinengestell (**2**) und der Arbeitsplatte (**5**) auf ihrem proximalen Ende ein Querlager (**6**) angeordnet und die Leitung des Schmierölsystems (**11**) ausgeführt ist, wobei das Verhältnis des Durchmessers (**D**) vom Rotor (10) zur Höhe (**h**) des Ständers (**9**) des Momentmotors (**3**) grösser als 2 ist, **dadurch gekennzeichnet, dass** a Drehmoment des Motors mehr als 10.000 Nm beträgt und der Motor über mehr als 100 Pole verfügt und am distalen Ende zur Sicherung der horizontalen Lage des drehbaren Teils (**25**) das Axiallager (**7**) angeordnet ist, das an die Leitung (**11**) des Schmierölsystems oder an das hydrostatisches System (**28**) angeschlossen ist.

2. Der Aufbau des Drehtisches einer großen Bearbeitungsmaschine, hauptsächlich einer Karussell-Drehbank, nach Anspruch 1, **dadurch gekennzeichnet, dass** das hydrostatische System aus einer oberen Fläche (32) und einer unteren Fläche (**31**) besteht, die mit Taschen (**34**) für die Aufbewahrung des hydraulischen Öls ausgestattet ist, an die die hydrostatische Leitung (**8**) des hydraulischen Öls angeschlossen ist, durch die es in das hydrostatische System (**28**) aus dem hydraulischen Aggregat (**33**) geführt ist.

## Revendications

1. Arrangement de la table tournante d'une grande machine d'usinage, surtout le carrousel, constitué d'un moteur moment (**3**) et d'un système de dépôt (**27**), sur lequel sont arrangés la partie tournante (**25**) et la partie fixe (**24**), où l'élément intégral de la partie fixe (**24**) de la machine constituée du support (**2**) de la machine est le stator (**9**) du moteur moment (**3**) muni d'au moins un enroulement et l'élément intégral de la partie tournante (**25**) de la machine constituée d'une plaque de travail (**5**) de la machine est le rotor (**10**) du moteur moment muni d'au moins un aimant permanent (**16**), où le rotor (**10**) et le stator (**9**) du moteur moment (**3**) sont arrangés coaxialement l'un vis-à-vis de l'autre et vis-à-vis de l'axe (**13**) de la machine et ils sont fixés au système de dépôt (27), qui est constitué d'un tourillon (**4**), qui est fixé au support (**2**), sur lequel est arrangé un roulement radial (**6**), sur lequel est fixé la plaque de travail (**5**), tandis que pour le logement tournant de la plaque de travail (**5**) est entre le support (**2**) et la plaque de travail (**5**) sur leur bout proximal arrangé le roulement radial (**6**), et la canalisation (**11**) du système de graissage est sortie, et le rapport du diamètre (**D**) du rotor (**10**) par rapport à la hauteur (**h**) du stator (**9**) du moteur moment (**3**) est supérieur à 2, **caractérisé en ce que** le moment tournant du moteur est supérieur à 10.000 Nm et le moteur a le nombre de pôles supérieur à 100 et sur le bout distant est dans le but d'assurer la position horizontale de la partie tournante (**25**) arrangé le roulement axial (**7**) raccordé à la canalisation (**11**) du système de graissage ou le système hydrostatique (**28**).

2. Arrangement de la table tournante d'une grande machine d'usinage, surtout le carrousel avant selon la revendication 1, **caractérisé en ce que** le système hydrostatique est constitué par la surface supérieure (**32**) et la surface inférieure (**31**), qui est munie par les poches (**34**) pour la conservation d'huile hydraulique sur lesquelles est raccordé la canalisation hydrostatique (**8**) de l'huile hydraulique par laquelle est celle-ci amenée dans le système hydrostatique (**28**) de l'agrégat hydraulique (**33**).
